# EUROPÄISCHE PATENTSCHRIFT

(11) **EP 3 621 266 B1**
(45) Veröffentlichungstag und Bekanntmachung des Hinweises auf die Patenterteilung: **28.07.2021**
(21) Anmeldenummer: 18192700.5
(22) Anmeldetag: 05.09.2018
(51) Int. Cl.: H04L 29/06, G06F 9/46, G06F 21/12, G06F 21/33, G06F 9/48, G06F 9/54, G06F 21/62, H04L 29/08

(54) **VERFAHREN ZUM BETRIEB EINES WEBSERVERS**
METHOD FOR OPERATING A WEB SERVER
PROCÉDÉ DE FONCTIONNEMENT D'UN SERVEUR WEB

(43) Veröffentlichungstag der Anmeldung: 11.03.2020
(73) Patentinhaber: Siemens Aktiengesellschaft, 80333 München (DE)
(72) Erfinder: Kuznetsov, Sergej, 76767 Hagenbach (DE); Geissler, Klaus, 76532 Baden-Baden (DE); Klose, Ralf, 90518 Altdorf (DE); Mildenberger, Ralf, 77746 Schutterwald (DE)

(56) Entgegenhaltungen:
- DE-A1-102005 045 944
- US-A- 5 903 732
- US-B1- 8 447 829

## Beschreibung

Die Erfindung betrifft ein Verfahren zum Betrieb eines Webservers sowie einen Rechner mit einem darauf implementierten Webserver. Ferner betrifft die Erfindung ein Computerprogrammprodukt sowie ein Computerprogramm.

Aus dem Stand der Technik ist die Verwendung von sog. Webservern bekannt, die auf Rechnern implementiert sind und eine Kommunikation mit Clients ermöglichen. Ein Vorteil dieser webserverbasierten Kommunikation besteht darin, dass sie unabhängig von dem Betriebssystem der Clients und des Rechners ist, auf dem der Webserver läuft.

Webserver werden mittlerweile in einer Vielzahl von Anwendungsbereichen genutzt, um über Clients auf Rechner zuzugreifen. Der Zugriff erfolgt dabei in der Regel über einen Browser, der auf dem Client vorgesehen ist. Webserver sind beispielsweise auf Steuerungsrechnern einer Automatisierungsanlage implementiert, um Clients einen Zugriff auf die Steuerungsrechner zu ermöglichen.

Im Rahmen einer webserverbasierten Kommunikation schickt der Client Anfragen (englisch: requests) an den Webserver, der diese Anfragen verarbeitet, um in den Anfragen spezifizierte Aktionen auszuführen. Die webserverbasierte Kommunikation weist dabei den Nachteil auf, dass die Anfragen nur einen eingeschränkten Zugriff auf den Rechner ermöglichen, auf dem der Webserver implementiert ist. Insbesondere können die Anfragen keine Aktionen auslösen, welche einen Zugriff auf geschützte Betriebssystembereiche ermöglichen. Demzufolge eignet sich die webserverbasierte Kommunikation nicht zur Durchführung von administrativen Tätigkeiten, wie z.B. der Wartung eines Rechners bzw. der Installation oder der Aktualisierung von Software auf einem Rechner.

Technisch ist es zwar möglich, einen Webserver-Prozess mit erhöhten Rechten zu starten, um auch die Durchführung von administrativen Tätigkeiten zu ermöglichen. Dies stellt jedoch ein sehr hohes Sicherheitsrisiko dar, da die erhöhten Rechte des Webservers die Gefahr mit sich bringen, dass unbefugte Dritte Manipulationen an geschützten Betriebssystembereichen durchführen.

Die Druckschrift US 5 903 732 A offenbart eine sichere Web-Plattform, bei der ein Webserver über einen vertrauenswürdigen Gateway-Agenten mit CGI-Applikationen kommuniziert.

Das Dokument DE 10 2005 045 944 A1 beschreibt einen Webserver, auf dem ein Controller-Prozess ausgeführt wird. Ferner wird ansprechend auf eine User-Anfrage nach Zugriff auf eine Ressource eines Clients ein Child-Prozess erzeugt. Die User-Anfrage wird dann mittels des Child-Prozesses bedient.

Aufgabe der Erfindung ist es, ein Verfahren zum Betrieb eines Webservers zu schaffen, das erhöhte Zugriffsrechte aufweist und dabei gut gegenüber unbefugten Angriffen geschützt ist.

Diese Aufgabe wird durch die unabhängigen Patentansprüche gelöst. Weiterbildungen der Erfindung sind in den abhängigen Ansprüchen definiert.

Das erfindungsgemäße Verfahren dient zum Betrieb eines Webservers, der auf einem Rechner mit darauf laufendem Betriebssystem implementiert ist. Der Webserver ist dabei in an sich bekannter Weise dazu eingerichtet, einen Webserver-Prozess unter Verwendung einer Web-Applikation auszuführen, um Anfragen von Clients zu verarbeiten. Der Webserver-Prozess wird im Normalbetrieb des Webservers mit Rechten ausgeführt, welche einen Zugriff (d.h. einen Lese- und Schreibzugriff) auf einen vorgegebenen Betriebssystembereich des Rechners ausschließen (d.h. nicht zulassen). Mit anderen Worten ist weder das Lesen noch das Schreiben im vorgegebenen Betriebssystembereich zulässig. Der vorgegebene Betriebssystembereich ist somit ein geschützter Speicherbereich des Betriebssystems, der je nach Ausgestaltung unterschiedlich definiert werden kann. In der Regel handelt es sich um einen Bereich, in dem unbefugte Manipulationen von Angreifern gravierenden Schaden im Betriebssystem bzw. am Rechner hervorrufen können.

Im Rahmen des erfindungsgemäßen Verfahrens wird nach Start des Webservers zunächst eine Anlaufphase durchlaufen, bei der der Webserver-Prozess mit erhöhten Rechten ausgeführt wird, welche zusätzlich zu den Rechten im Normalbetrieb den Zugriff auf den vorgegebenen Betriebssystembereich des Rechners ermöglichen. Da in dieser Anlaufphase ein erhöhtes Sicherheitsrisiko besteht, werden (sämtliche) Anfragen von Clients in dieser Anlaufphase durch den Webserver-Prozess ignoriert. Ferner startet der Webserver-Prozess in dieser Anlaufphase einen weiteren Prozess mit den erhöhten Rechten des Webserver-Prozesses, wobei der weitere Prozess zur Ausführung von Aktionen mit Zugriff auf den vorgegebenen Betriebssystembereich vorgesehen ist.

Im Anschluss an die Anlaufphase, vorzugsweise unmittelbar nach dem Start des weiteren Prozesses, geht der Webserver-Prozess in den Normalbetrieb über, d.h. in einen Betrieb, der einen Zugriff des Webserver-Prozesses auf den vorgegebenen Betriebssystembereich nicht zulässt. Falls im Normalbetrieb der Webserver-Prozess nunmehr eine Anfrage erhält, welche eine Aktion mit Zugriff auf den vorgegebenen Betriebssystembereich erfordert, wird durch den Webserver-Prozess die Zulässigkeit der erhaltenen Anfrage überprüft. Dabei wird bei einer zulässigen Anfrage zwischen dem Webserver-Prozess und dem weiteren Prozess eine Kommunikation durchgeführt, welche den weiteren Prozess zur Ausführung der Aktion mit dem erforderlichen Zugriff auf den vorgegebenen Betriebssystembereich gemäß der erhaltenen Anfrage veranlasst. Ist die Anfrage nicht zulässig, wird diese Kommunikation nicht durchgeführt und die Anfrage wird durch den Webserver-Prozess verworfen.

Das erfindungsgemäße Verfahren weist den Vorteil auf, dass durch die Initialisierung eines weiteren Prozesses mit erhöhten Rechten durch einen Webserver-Prozess die Möglichkeit geschaffen wird, auf geschützte Betriebssystembereiche zuzugreifen. Dabei wird zu jeder Zeit sichergestellt, dass der Webserver-Prozess selbst nicht auf geschützte Betriebssystembereiche zugreift. In einer Anlaufphase wird dies dadurch erreicht, dass der Webserver-Prozess zwar mit erhöhten Rechten gestartet ist, jedoch in dieser Phase alle Anfragen von Clients durch ihn ignoriert werden.

In einer besonders bevorzugten Ausführungsform des erfindungsgemäßen Verfahrens wird der Webserver durch entfernte Client angesprochen. In diesem Fall stammen die Anfragen an den Webserver von Clients, die auf einem anderen Rechner als dem Rechner implementiert sind, auf dem der Webserver implementiert ist.

In einer weiteren bevorzugten Ausgestaltung lassen die erhöhten Rechte im Unterschied zu den nicht erhöhten Rechten des Webserver-Prozesses die Installation von Software auf dem Rechner zu, auf dem der Webserver implementiert ist.

Je nach Ausgestaltung des erfindungsgemäßen Verfahrens kann das Ignorieren von Anfragen im Rahmen der Anlaufphase unterschiedlich erfolgen. In einer Variante ignoriert der Webserver-Prozess die Anfragen dadurch, dass er einen Port, der zur Kommunikation mit Clients vorgesehen ist, geschlossen hält. Dieser Port wird erst im Normalbetrieb des Webservers geöffnet.

In einer weiteren Variante der Erfindung ist in der Anlaufphase ein Port, der zur Kommunikation mit den Clients vorgesehen ist, bereits geöffnet. Das Ignorieren von Anfragen durch den Webserver-Prozess erfolgt dabei derart, dass die Anfragen durch den Webserver-Prozess zwar empfangen, jedoch anschließend abgewiesen (d.h. nicht verarbeitet) werden.

Die Überprüfung der Zulässigkeit von Anfragen, die einen Zugriff auf den vorgegebenen Betriebssystembereich nach sich ziehen, kann je nach Ausführungsform der Erfindung unterschiedlich festgelegt sein. In einer bevorzugten Variante wird im Rahmen der Überprüfung der Zulässigkeit einer erhaltenen Anfrage basierend auf Informationen in der erhaltenen Anfrage der Sender der Anfrage identifiziert. Beispielsweise können die Informationen unmittelbar die entsprechende Senderidentifikation darstellen. Der Begriff des Senders ist dabei weit zu verstehen. Vorzugsweise handelt es sich um die Identifikation eines Benutzers, der die Anfrage an dem entsprechenden Client generiert. Im Rahmen dieser Variante der Erfindung ist es eine erforderliche Bedingung für die Zulässigkeit der Anfrage, dass der identifizierte Sender von dem Webserver-Prozess als ein Sender aus einer Anzahl von berechtigten Sendern erkannt wird. Auf diese Weise können administrative Tätigkeiten auf bestimmte Sender beschränkt werden.

In einer weiteren Ausgestaltung des erfindungsgemäßen Verfahrens umfasst eine erhaltene Anfrage eine digitale Signatur, wobei im Rahmen der Überprüfung der Zulässigkeit der erhaltenen Anfrage die Signatur verifiziert wird. Eine erforderliche Bedingung für die Zulässigkeit der Anfrage besteht dabei darin, dass die Signatur erfolgreich verifiziert werden kann. Vorzugsweise wird diese Variante der Erfindung mit der oben beschriebenen Variante kombiniert, wonach überprüft wird, ob es sich bei dem Sender der Anfrage um einen berechtigten Sender handelt. Mit anderen Worten ist es in diesem Fall für die Zulässigkeit der Anfrage erforderlich, dass zum einen die digitale Signatur der Anfrage erfolgreich verifiziert werden kann und zum anderen der Sender als berechtigter Sender erkannt werden kann.

In einer weiteren bevorzugten Ausgestaltung des erfindungsgemäßen Verfahrens werden die Anfragen der Clients in an sich bekannter Weise jeweils durch einen Benutzer über einen auf dem entsprechenden Client laufenden Browser generiert, der mit der Web-Applikation interagiert.

Das erfindungsgemäße Verfahren kann in beliebigen technischen Bereichen zum Einsatz kommen. Ein bevorzugtes Anwendungsgebiet ist die Kommunikation mit Rechnern in einer Automatisierungsanlage. Eine Automatisierungsanlage dient dabei zur automatisierten Durchführung von Aufgaben. Insbesondere kann es sich um eine Fertigungs- bzw. Produktionsanlage und gegebenenfalls auch um eine Logistikanlage handeln. Bei der Verwendung der Erfindung in einer solchen Automatisierungsanlage ist der Rechner, auf dem der Webserver implementiert ist, ein Steuerungsrechner in der Automatisierungsanlage.

Neben dem oben beschriebenen Verfahren betrifft die Erfindung einen Rechner, auf dem ein Webserver implementiert ist und auf dem ein Betriebssystem installiert ist, wobei der Webserver dazu eingerichtet ist, einen Webserver-Prozess unter Verwendung einer Web-Applikation auszuführen, um Anfragen von Clients zu verarbeiten. Dabei wird der Webserver-Prozess im Normalbetrieb des Webservers mit Rechten ausgeführt, welche einen Zugriff auf einen vorgegebenen Betriebssystembereich des Rechners ausschließen. Der Webserver dieses erfindungsgemäßen Rechners ist zur Durchführung des erfindungsgemäßen Verfahrens bzw. einer oder mehrerer bevorzugter Varianten des erfindungsgemäßen Verfahrens eingerichtet.

Die Erfindung betrifft darüber hinaus ein Computerprogrammprodukt mit einem auf einem maschinenlesbaren Träger gespeicherten Programmcode zur Durchführung des erfindungsgemäßen Verfahrens bzw. einer oder mehrerer bevorzugter Varianten des erfindungsgemäßen Verfahrens, wenn der Programmcode auf einem Computer ausgeführt wird. Dieses Computerprogrammprodukt umfasst somit einen maschinenlesbarer Träger mit darauf befindlicher Software, durch welche der oben beschriebene Webserver realisiert wird.

Die Erfindung betrifft darüber hinaus ein Computerprogramm mit einem Programmcode zur Durchführung des erfindungsgemäßen Verfahrens bzw. einer oder mehrerer bevorzugter Varianten des erfindungsgemäßen Verfahrens, wenn der Programmcode auf einem Computer ausgeführt wird. Dieses Computerprogramm betrifft somit eine Software, über die der oben beschriebene Webserver realisiert wird.

Ein Ausführungsbeispiel der Erfindung wird nachfolgend anhand der beigefügten Figuren detailliert beschrieben.

Es zeigen:
- Fig. 1: eine schematische Darstellung einer Client-Server-Architektur, die einen Webserver umfasst, der basierend auf einer Ausführungsform des erfindungsgemäßen Verfahrens betrieben wird; und
- Fig. 2: ein Ablaufdiagramm, das eine Ausführungsform des erfindungsgemäßen Verfahrens zum Betrieb eines Webservers verdeutlicht.

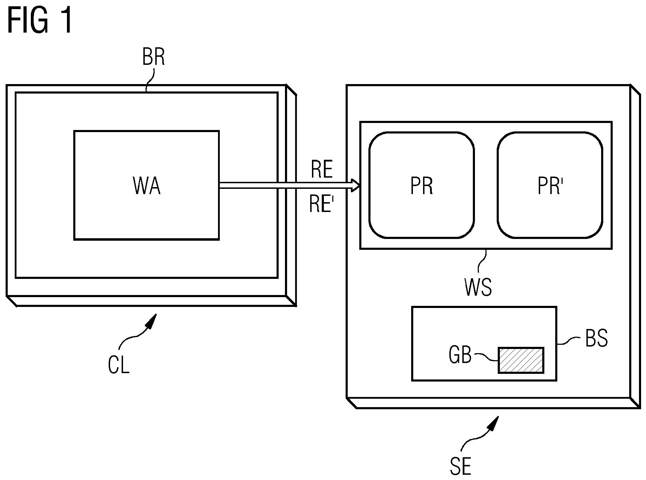

Gemäß Fig. 1 ist auf einem schematisch dargestellten Rechner in der Form eines Servers SE ein Webserver WS implementiert, der mit einem Client CL wechselwirken kann. Im hier beschriebenen Ausführungsbeispiel läuft der Client dabei auf einem Gerät, das nicht der Server SE ist, z.B. auf einem anderen Rechner, einem Smartphone, einem Tablet und dergleichen. Der Server SE umfasst neben dem Webserver WS ein darauf laufendes Betriebssystem BS, das einen geschützten Bereich GB umfasst, auf den im Normalbetrieb des Webservers WS nicht zugegriffen werden kann. Der geschützte Bereich ist ein Speicherbereich des Betriebssystems, der gegebenenfalls auf mehrere separate Speicherabschnitte verteilt sein kann.

In einer beispielhaften Anwendung ist der Server SE ein Steuerungsrechner einer Automatisierungsanlage, z.B. der Steuerungsrechner für eine bestimmte Komponente der Automatisierungsanlage. Dabei ist es das Ziel, dass im Normalbetrieb der Automatisierungsanlage Befehle durch einen Benutzer über den Client CL an den Webserver zur Bedienung des Steuerungsrechners gegebenen werden können und zusätzlich die Möglichkeit geschaffen wird, dass durch berechtigte Benutzer administrative Vorgänge am Server SE über den Client CL initiiert werden können, wie z.B. die Installation von Software. Herkömmlicherweise können solche administrativen Zugriffe nicht über die Kommunikation eines Clients mit einem Webserver realisiert werden.

Gemäß Fig. 1 kommuniziert ein (nicht gezeigter) Benutzer an dem Client CL über einen Browser BR mit dem Webserver WS, wobei hierfür eine Web-Applikation bzw. Webanwendung WA genutzt wird. Im Rahmen dieser Kommunikation sendet der Client durch den Benutzer generierte Anfragen RE an den Webserver WS, der im Normalbetrieb diese Anfragen verarbeitet. Hierzu führt der Webserver WS einen Webserver-Prozess PR unter Verwendung der Web-Applikation WA aus. Erfindungswesentlich ist nunmehr, dass im Webserver WS zusätzlich ein weiterer Kind-Prozess PR' neben dem Webserver-Prozess PR ausgeführt wird. Dieser Prozess PR' kann Aktionen basierend auf speziellen Anfragen RE' des Clients CL ausführen, und zwar basierend auf solchen Anfragen, für die ein Zugriff auf den geschützten Bereich GB des Betriebssystems BS erforderlich ist. Mit anderen Worten dient der Kind-Prozess PR' zur Ausführung von administrativen Aufgaben, die auf speziellen Anfragen RE' basieren. Diese Anfragen können von dem Webserver-Prozess PR nicht zur Ausführung gebracht werden.

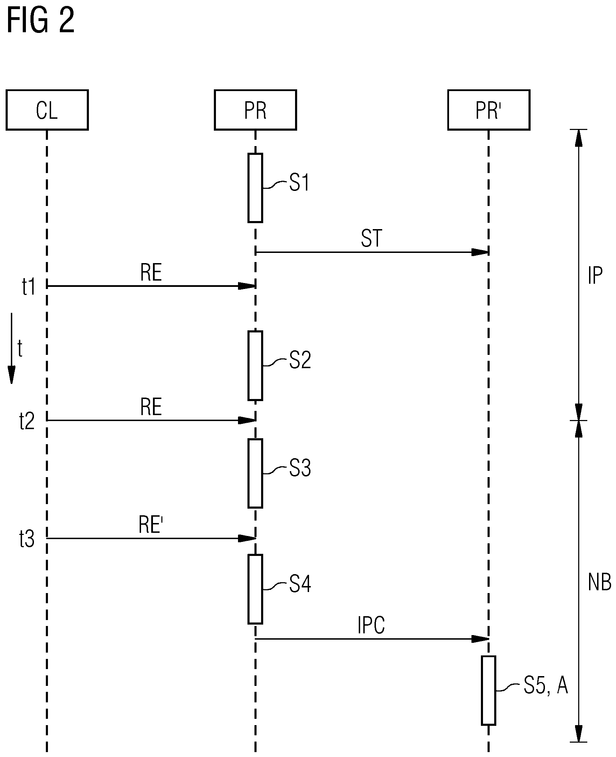

Fig. 2 zeigt basierend auf einem Zeitablaufdiagramm die Wechselwirkung der in Fig. 1 gezeigten Komponenten im Rahmen einer Ausführungsform des erfindungsgemäßen Verfahrens. In diesem Diagramm ist in vertikaler Richtung nach unten die Zeit t ab dem Starten des Webservers wiedergegeben. Darüber hinaus sind schematisch die an der Kommunikation beteiligten Komponenten durch die Bezugszeichen CL (Client), PR (Webserver-Prozess) und PR' (Kind-Prozess) sowie entsprechend zugeordnete vertikale Linien angedeutet.

Zu Beginn des Verfahrens wird nach dem Starten des Webservers WS zunächst eine Anlauf- bzw. Initialisierungsphase durchlaufen, die in Fig. 2 mit IP bezeichnet ist. Erst anschließend wird in den Normalbetrieb des Webservers übergegangen, der in Fig. 2 mit NB bezeichnet ist. Gemäß Fig. 2 wird der Webserver-Prozess PR in Schritt S1 gestartet. Dabei wird der Prozess PR jedoch nicht mit herkömmlichen Rechten ausgeführt, sondern mit erhöhten Rechten, die einen Zugriff auf den geschützten Bereich GB des Betriebssystems BS aus Fig. 1 erlauben. Der mit erhöhten Rechten laufende Webserver-Prozess PR startet anschließend gemäß Pfeil ST der Fig. 2 den bereits oben genannten Kind-Prozess PR', wobei dieser Kind-Prozess PR' die gleichen Rechte wie der Webserver-Prozess PR hat, d.h. der Kind-Prozess wird mit den gleichen erhöhten Rechten wie der Webserver-Prozess initiiert. Der Kind-Prozess PR' dient dabei zur Durchführung von administrativen Aktionen auf dem Server SE, die einen Zugriff auf den geschützten Bereich GB des Betriebssystems BS benötigen.

Aufgrund des Starts des Webserver-Prozesses PR mit erhöhten Rechten besteht ein Sicherheitsrisiko durch unbefugte Anfragen, die darauf abzielen, geschützte Bereiche des Betriebssystems zu manipulieren. Um dieses Sicherheitsrisiko auszuschalten, wird in der Anlaufphase IP der Port des Webservers hin zu Clients noch nicht geöffnet. Als Konsequenz werden alle Anfragen im Zeitraum der Anlaufphase IP ignoriert. Gemäß Fig. 2 wird beispielsweise zum Zeitpunkt t1 eine Anfrage RE vom Client CL an den Webserver bzw. den Webserver-Prozess PR geschickt. Diese Anfrage wird jedoch wegen des geschlossenen Ports nicht verarbeitet. In einer abgewandelten Ausführungsform besteht auch die Möglichkeit, dass in der Anlaufphase IP der Port bereits geöffnet wird, wobei in diesem Fall entsprechende Anfragen zwar vom Webserver-Prozess PR empfangen werden, jedoch nicht weiterverarbeitet werden und in diesem Sinne abgewiesen werden.

Nachdem der Kind-Prozess PR' gestartet wurde, stuft sich der Webserver-Prozess PR' gemäß Schritt S2 der Fig. 2 selbst herab, d.h. er geht in den Normalbetrieb über, in dem er nur Anfragen des Clients CL verarbeiten kann, die keinen Zugriff auf den geschützten Bereich GB des Betriebssystems BS erfordern. In Fig. 2 ist eine solche Anfrage RE dargestellt, die zum Zeitpunkt t2 vom Client CL an den Webserver-Prozess gesendet wird. Diese Anfrage wird gemäß dem in Fig. 2 gezeigten Schritt S3 durch den Webserver-Prozess verarbeitet.

Durch den Start des Kind-Prozesses PR' ist es nunmehr im Normalbetrieb NB auch möglich, solche Anfragen RE' zu verarbeiten, gemäß denen Aktionen auf dem Server SE auszuführen sind, welche einen Zugriff auf den geschützten Bereich GB des Betriebssystems BS erfordern. Zum Zeitpunkt t3 ist eine solche Anfrage RE' wiedergegeben. Gemäß Schritt S4 überprüft der Webserver-Prozess PR, ob diese Anfrage zulässig ist. Dabei wird mittels der Anfrage RE' auch eine Identifikation des Senders der Anfrage sowie eine digitale Signatur des Senders übermittelt. Der Sender entspricht dem Benutzer, der gerade über den Browser BR mit dem Webserver WS kommuniziert.

Im Webserver-Prozess PR ist hinterlegt, welche Benutzer Administratorrechte haben. Demzufolge wird in Schritt S4 überprüft, ob es sich bei dem Sender der Nachricht RE' um einen Benutzer mit Administratorrechten handelt. Darüber hinaus wird die Signatur verifiziert. Nur im Falle, dass der Benutzer Administratorrechte hat und die digitale Signatur der Anfrage RE' erfolgreich verifiziert werden kann, wird die Anfrage als zulässig eingestuft und das Verfahren wird durch eine an sich bekannte Interprozess-Kommunikation IPC zwischen dem Webserver-Prozess PR und dem Kind-Prozess PR' fortgesetzt. Diese Kommunikation löst den in Fig. 2 gezeigten Schritt S5 aus, der wiederum eine Aktion A ausführt, für welche ein Zugriff auf geschützte Bereiche des Betriebssystems BS des Servers SE erforderlich ist. Eine solche Aktion kann beispielsweise die Installation von Software im Rahmen der Wartung des Servers SE sein.

Die im Vorangegangenen beschriebene Ausführungsform der Erfindung weist eine Reihe von Vorteilen auf. Insbesondere wird eine webserverbasierte Kommunikation zwischen einem Client und einem Server ermöglicht, mit der administrative Prozesse auf dem Server durchgeführt werden können, was herkömmlicherweise bei einer webserverbasierten Kommunikation nicht möglich ist. Die Kommunikation ist durch die Verwendung des Webservers dabei vom Betriebssystem des Clients und des Servers unabhängig und erfordert keine Installation spezieller Administrations-Tools auf Seiten des Clients. Darüber hinaus wird eine ausreichende Sicherheit des Verfahrens dadurch gewährleistet, dass in einer Anlaufphase, in welcher der Webserver-Prozess mir erhöhten Rechten ausgeführt wird, nach Start des Webservers mit erhöhten Rechten zunächst keine Anfragen durch den Webserver verarbeitet werden.

## Patentansprüche

1. Verfahren zum Betrieb eines Webservers (WS), der auf einem Rechner (SE) mit darauf laufendem Betriebssystem (BS) implementiert ist, wobei der Webserver (WS) dazu eingerichtet ist, einen Webserver-Prozess (PR) unter Verwendung einer Web-Applikation (WA) auszuführen, um Anfragen (RE, RE') von Clients (CL) zu verarbeiten, wobei der Webserver-Prozess (PR) im Normalbetrieb (NB) des Webservers (WS) mit Rechten ausgeführt wird, welche einen Zugriff auf einen vorgegebenen Betriebssystembereich (GB) des Rechners (SE) ausschließen, **dadurch gekennzeichnet, dass**
- in einer Anlaufphase (IP) des Webservers (WS) nach dessen Start der Webserver-Prozess (PR) mit erhöhten Rechten ausgeführt wird, welche zusätzlich zu den Rechten im Normalbetrieb (NB) den Zugriff auf den vorgegebenen Betriebssystembereich (GB) des Rechners (SE) ermöglichen, wobei in der Anlaufphase (IP) der Webserver-Prozess (PR) Anfragen (RE, RE') von Clients (CL) ignoriert und durch den Webserver-Prozess (PR) ein weiterer Prozess (PR') mit den erhöhten Rechten des Webserver-Prozesses (PR) gestartet wird, wobei der weitere Prozess (PR') zur Ausführung von Aktionen (A) mit Zugriff auf den vorgegebenen Betriebssystembereich (GB) vorgesehen ist;
- im Anschluss an die Anlaufphase (IP) der Webserver-Prozess (PR) in den Normalbetrieb (NB) übergeht, um Anfragen (RE, RE') von Clients (CL) zu verarbeiten, wobei im Falle, dass der Webserver-Prozess (PR) eine Anfrage (RE') erhält, welche eine Aktion (A) mit Zugriff auf den vorgegebenen Betriebssystembereich (GB) erfordert, durch den Webserver-Prozess (PR) die Zulässigkeit der erhaltenen Anfrage (RE') überprüft wird, wobei bei einer zulässigen Anfrage zwischen dem Webserver-Prozess (PR) und dem weiteren Prozess (PR') eine Kommunikation (IPC) stattfindet, welche den weiteren Prozess (PR') zur Ausführung der Aktion (A) mit dem erforderlichen Zugriff auf den vorgegebenen Betriebssystembereich (GB) gemäß der erhaltenen Anfrage (RE') veranlasst.

2. Verfahren nach Anspruch 1, **dadurch gekennzeichnet, dass** die Anfragen (RE, RE') von Clients (CL) stammen, die auf einem anderen Rechner als dem Rechner (SE) implementiert sind, auf dem der Webserver (WS) implementiert ist.

3. Verfahren nach Anspruch 1 oder 2, **dadurch gekennzeichnet, dass** die erhöhten Rechte im Unterschied zu den nicht erhöhten Rechten des Webserver-Prozesses (PR) die Installation von Software auf dem Rechner (SE) zulassen, auf dem der Webserver (WS) implementiert ist.

4. Verfahren nach einem der Ansprüche 1 bis 3, **dadurch gekennzeichnet, dass** der Webserver-Prozess (PR) die Anfragen (RE, RE') in der Anlaufphase (IP) ignoriert, indem er einen Port, der zur Kommunikation mit Clients (CL) vorgesehen ist, geschlossen hält, wobei der Port im Normalbetrieb (NB) geöffnet wird.

5. Verfahren nach einem der Ansprüche 1 bis 3, **dadurch gekennzeichnet, dass** in der Anlaufphase ein Port, der zur Kommunikation mit Clients (CL) vorgesehen ist, geöffnet ist und der Webserver-Prozess (PR) die Anfragen (RE, RE') ignoriert, indem er sie abweist.

6. Verfahren nach einem der vorhergehenden Ansprüche, **dadurch gekennzeichnet, dass** im Rahmen der Überprüfung der Zulässigkeit der erhaltenen Anfrage (RE') basierend auf Informationen in der erhaltenen Anfrage (RE') der Sender der Anfrage (RE') identifiziert wird, wobei eine erforderliche Bedingung für die Zulässigkeit der Anfrage (RE') darin besteht, dass der identifizierte Sender vom Webserver-Prozess (PR) als ein Sender aus einer Anzahl von berechtigten Sendern erkannt wird.

7. Verfahren nach einem der vorhergehenden Ansprüche, **dadurch gekennzeichnet, dass** die erhaltene Anfrage (RE') eine digitale Signatur umfasst, wobei im Rahmen der Überprüfung der Zulässigkeit der erhaltenen Anfrage (RE') die Signatur verifiziert wird, wobei eine erforderliche Bedingung für die Zulässigkeit der Anfrage (RE') darin besteht, dass die Signatur erfolgreich verifiziert werden kann.

8. Verfahren nach einem der vorhergehenden Ansprüche, **dadurch gekennzeichnet, dass** die Anfragen (RE, RE') der Clients (CL) jeweils durch einen Benutzer über einen auf dem entsprechenden Client (CL) laufenden Browser (BR) generiert werden, der mit der Web-Applikation (WA) interagiert.

9. Verfahren nach einem der vorhergehenden Ansprüche, **dadurch gekennzeichnet, dass** der Rechner (SE), auf dem der Webserver (WS) implementiert ist, ein Steuerungsrechner in einer Automatisierungsanlage ist.

10. Rechner, auf dem ein Webserver (WS) implementiert ist und auf dem ein Betriebssystem (BS) installiert ist, wobei der Webserver (WS) dazu eingerichtet ist, einen Webserver-Prozess (PR) unter Verwendung einer Web-Applikation (WA) auszuführen, um Anfragen (RE, RE') von Clients (CL) zu verarbeiten, wobei der Webserver (WS) dazu eingerichtet ist, den Webserver-Prozess (PR) im Normalbetrieb des Webservers (WS) mit Rechten auszuführen, welche einen Zugriff auf einen vorgegebenen Betriebssystembereich (GB) des Rechners (SE) ausschließen, **dadurch gekennzeichnet, dass** der Webserver (WS) zur Durchführung eines Verfahrens ausgestaltet ist, bei dem:
- in einer Anlaufphase (IP) des Webservers (WS) nach dessen Start der Webserver-Prozess (PR) mit erhöhten Rechten ausgeführt wird, welche zusätzlich zu den Rechten im Normalbetrieb (NB) den Zugriff auf den vorgegebenen Betriebssystembereich (GB) des Rechners (SE) ermöglichen, wobei in der Anlaufphase (IP) der Webserver-Prozess (PR) Anfragen (RE, RE') von Clients (CL) ignoriert und durch den Webserver-Prozess (PR) ein weiterer Prozess (PR') mit den erhöhten Rechten des Webserver-Prozesses (PR) startet, wobei der weitere Prozess (PR') zur Ausführung von Aktionen mit Zugriff auf den vorgegebenen Betriebssystembereich (GB) vorgesehen ist;
- im Anschluss an die Anlaufphase (IP) der Webserver-Prozess (PR) in den Normalbetrieb übergeht, um Anfragen von Clients (CL) zu verarbeiten, wobei im Falle, dass der Webserver-Prozess (PR) eine Anfrage (RE') erhält, welche eine Aktion (A) mit Zugriff auf den vorgegebenen Betriebssystembereich (GB) erfordert, durch den Webserver-Prozess (PR) die Zulässigkeit der erhaltenen Anfrage (RE') überprüft wird, wobei bei einer zulässigen Anfrage zwischen dem Webserver-Prozess (PR) und dem weiteren Prozess (PR') eine Kommunikation (IPC) stattfindet, welche den weiteren Prozess (PR') zur Ausführung der Aktion (A) mit dem erforderlichen Zugriff auf den vorgegebenen Betriebssystembereich (GB) gemäß der erhaltenen Anfrage (RE') veranlasst.

11. Rechner nach Anspruch 10, **dadurch gekennzeichnet, dass** der Webserver (WS) des Rechners (SE) zur Durchführung eines Verfahrens nach einem der Ansprüche 2 bis 9 eingerichtet ist.

12. Computerprogrammprodukt mit einem auf einem maschinenlesbaren Träger gespeicherten Programmcode zur Durchführung eines Verfahrens nach einem der Ansprüche 1 bis 9, wenn der Programmcode auf einem Computer ausgeführt wird.

13. Computerprogramm mit einem Programmcode zur Durchführung eines Verfahrens nach einem der Ansprüche 1 bis 9, wenn der Programmcode auf einem Computer ausgeführt wird.

## Claims

1. Method for operating a web server (WS) that is implemented on a computer (SE) having an operating system (BS) running thereon, wherein the web server (WS) is configured so as to execute a web server process (PR) using a web application (WA) in order to process requests (RE, RE') from clients (CL), wherein the web server process (PR), during normal operation (NB) of the web server (WS), is executed with permissions that rule out access to a predefined operating system area (GB) of the computer (SE), **characterized in that**
- in a launch phase (IP) of the web server (WS) after the start thereof, the web server process (PR) is executed with elevated permissions that, in addition to the permissions during normal operation (NB), allow access to the predefined operating system area (GB) of the computer (SE), wherein, in the launch phase (IP), the web server process (PR) ignores requests (RE, RE') from clients (CL) and a further process (PR') having the elevated permissions of the web server process (PR) is started by the web server process (PR), wherein the further process (PR') is intended to execute actions (A) with access to the predefined operating system area (GB);
- following the launch phase (IP), the web server process (PR) transitions to normal operation (NB) in order to process requests (RE, RE') from clients (CL), wherein, in the event that the web server process (PR) receives a request (RE') that requires an action (A) with access to the predefined operating system area (GB), the permissibility of the received request (RE') is checked by the web server process (PR), wherein, in the event of a permissible request, the web server process (PR) and the further process (PR') communicate (IPC), which prompts the further process (PR') to execute the action (A) with the required access to the predefined operating system area (GB) in accordance with the received request (RE').

2. Method according to Claim 1, **characterized in that** the requests (RE, RE') originate from clients (CL) that are implemented on a computer different from the computer (SE) on which the web server (WS) is implemented.

3. Method according to Claim 1 or 2, **characterized in that** the elevated permissions, in contrast to the non-elevated permissions of the web server process (PR), permit the installation of software on the computer (SE) on which the web server (WS) is implemented.

4. Method according to one of Claims 1 to 3, **characterized in that** the web server process (PR) ignores the requests (RE, RE') in the launch phase (IP) by keeping a port that is provided for communication with clients (CL) closed, wherein the port is open during normal operation (NB).

5. Method according to one of Claims 1 to 3, **characterized in that**, in the launch phase, a port that is provided for communication with clients (CL) is open and the web server process (PR) ignores the requests (RE, RE') by dismissing them.

6. Method according to one of the preceding claims, **characterized in that** the sender of the request (RE') is identified, in the context of the check on the permissibility of the received request (RE'), based on information in the received request (RE'), wherein one required condition for the permissibility of the request (RE') is that the identified sender is recognized by the web server process (PR) as a sender from a number of authorized senders.

7. Method according to one of the preceding claims, **characterized in that** the received request (RE') comprises a digital signature, wherein the signature is verified in the context of the check on the permissibility of the received request (RE'), wherein one required condition for the permissibility of the request (RE') is that the signature is able to be verified successfully.

8. Method according to one of the preceding claims, **characterized in that** the requests (RE, RE') from the clients (CL) are generated in each case by a user via a browser (BR) running on the corresponding client (CL) and that interacts with the web application (WA).

9. Method according to one of the preceding claims, **characterized in that** the computer (SE) on which the web server (WS) is implemented is a control computer in an automation facility.

10. Computer on which a web server (WS) is implemented and on which an operating system (BS) is installed, wherein the web server (WS) is configured so as to execute a web server process (PR) using a web application (WA) in order to process requests (RE, RE') from clients (CL), wherein the web server (WS) is configured so as, during normal operation of the web server (WS), to execute the web server process (PR) with permissions that rule out access to a predefined operating system area (GB) of the computer (SE), **characterized in that** the web server (WS) is designed to perform a method in which:
- in a launch phase (IP) of the web server (WS) after the start thereof, the web server process (PR) is executed with elevated permissions that, in addition to the permissions during normal operation (NB), allow access to the predefined operating system area (GB) of the computer (SE), wherein, in the launch phase (IP), the web server process (PR) ignores requests (RE, RE') from clients (CL) and starts a further process (PR') having the elevated permissions of the web server process (PR) by way of the web server process (PR), wherein the further process (PR') is intended to execute actions with access to the predefined operating system area (GB) ;
- following the launch phase (IP), the web server process (PR) transitions to normal operation in order to process requests from clients (CL), wherein, in the event that the web server process (PR) receives a request (RE') that requires an action (A) with access to the predefined operating system area (GB), the permissibility of the received request (RE') is checked by the web server process (PR), wherein, in the event of a permissible request, the web server process (PR) and the further process (PR') communicate (IPC), which prompts the further process (PR') to execute the action (A) with the required access to the predefined operating system area (GB) in accordance with the received request (RE').

11. Computer according to Claim 10, **characterized in that** the web server (WS) of the computer (SE) is configured so as to perform a method according to one of Claims 2 to 9.

12. Computer program product having a program code, stored on a machine-readable carrier, for performing a method according to one of Claims 1 to 9 when the program code is executed on a computer.

13. Computer program having a program code for performing a method according to one of Claims 1 to 9 when the program code is executed on a computer.

## Revendications

1. Procédé de fonctionnement d'un serveur web (WS) qui est implémenté sur un ordinateur (SE) avec un système d'exploitation (BS) tournant dessus, le serveur web (WS) étant configuré pour exécuter un processus de serveur web (PR) en utilisant une application web (WA) pour traiter des requêtes (RE, RE') de clients (CL), le processus de serveur web (PR) étant exécuté en fonctionnement normal (NB) du serveur web (WS) avec des droits qui excluent un accès à une partie de système d'exploitation donnée (GB) de l'ordinateur (SE), **caractérisé en ce que** :
- dans une phase de démarrage (IP) du serveur web (WS), après son démarrage, le processus de serveur web (PR) est exécuté avec des droits accrus qui, en plus des droits en fonctionnement normal (NB), permettent l'accès à la partie de système d'exploitation donnée (GB) de l'ordinateur (SE), le processus de serveur web (PR), dans la phase de démarrage (IP), ignorant des requêtes (RE, RE') de clients (CL) et le processus de serveur web (PR) lançant un autre processus (PR') avec les droits accrus du processus de serveur web (PR), l'autre processus (PR') étant prévu pour exécuter des actions (A) avec accès à la partie de système d'exploitation donnée (GB) ;
- à la suite de la phase de démarrage (IP), le processus de serveur web (PR) passe en fonctionnement normal (NB) pour traiter des requêtes (RE, RE') de clients (CL), au cas où le processus de serveur web (PR) reçoit une requête (RE') qui nécessite une action (A) avec accès à la partie de système d'exploitation donnée (GB), le processus de serveur web (PR) vérifiant l'admissibilité de la requête reçue (RE'), en cas de requête admissible ayant lieu, entre le processus de serveur web (PR) et l'autre processus (PR'), une communication (IPC) qui fait exécuter à l'autre processus (PR') l'action (A) avec l'accès requis à la partie de système d'exploitation donnée (GB) conformément à la requête reçue (RE').

2. Procédé selon la revendication 1, **caractérisé en ce que** les requêtes (RE, RE') proviennent de clients (CL) qui sont implémentés sur un ordinateur autre que l'ordinateur (SE) sur lequel est implémenté le serveur web (WS).

3. Procédé selon la revendication 1 ou 2, **caractérisé en ce que** les droits accrus, à la différence des droits non accrus du processus de serveur web (PR), autorisent l'installation de logiciel sur l'ordinateur (SE) sur lequel est implémenté le serveur web (WS).

4. Procédé selon l'une des revendications 1 à 3, **caractérisé en ce que** le processus de serveur web (PR) ignore les requêtes (RE, RE') dans la phase de démarrage (IP) en fermant un port qui est prévu pour la communication avec des clients (CL), le port étant ouvert en fonctionnement normal (NB).

5. Procédé selon l'une des revendications 1 à 3, **caractérisé en ce que**, dans la phase de démarrage, un port qui est prévu pour la communication avec des clients (CL) est ouvert, et le processus de serveur web (PR) ignore les requêtes (RE, RE') en les rejetant.

6. Procédé selon l'une des revendications précédentes, **caractérisé en ce que**, dans le cadre de la vérification de l'admissibilité de la requête reçue (RE'), sur la base d'informations dans la requête reçue (RE'), l'émetteur de la requête (RE') est identifié, une condition nécessaire pour l'admissibilité de la requête (RE') consistant **en ce que** l'émetteur identifié soit reconnu par le processus de serveur web (PR) en tant qu'émetteur parmi un nombre d'émetteurs autorisés.

7. Procédé selon l'une des revendications précédentes, **caractérisé en ce que** la requête reçue (RE') comprend une signature numérique, la signature étant vérifiée dans le cadre de la vérification de l'admissibilité de la requête reçue (RE'), une condition nécessaire pour l'admissibilité de la requête (RE') consistant **en ce que** la signature puisse être vérifiée avec succès.

8. Procédé selon l'une des revendications précédentes, **caractérisé en ce que** les requêtes (RE, RE') des clients (CL) sont générées respectivement par un utilisateur via un navigateur (BR) tournant sur le client correspondant (CL), et qui interagit avec l'application web (WA).

9. Procédé selon l'une des revendications précédentes, **caractérisé en ce que** l'ordinateur (SE) sur lequel est implémenté le serveur web (WS) est un ordinateur de commande dans une installation d'automatisation.

10. Ordinateur sur lequel est implémenté un serveur web (WS) et sur lequel est installé un système d'exploitation (BS), le serveur web (WS) étant configuré pour exécuter un processus de serveur web (PR) en utilisant une application web (WA) pour traiter des requêtes (RE, RE') de clients (CL), le serveur web (WS) étant configuré pour exécuter le processus de serveur web (PR) en fonctionnement normal du serveur web (WS) avec des droits qui excluent un accès à une partie de système d'exploitation donnée (GB) de l'ordinateur (SE), **caractérisé en ce que** le serveur web (WS) est conçu pour exécuter un procédé dans lequel:
- dans une phase de démarrage (IP) du serveur web (WS), après son démarrage, le processus de serveur web (PR) est exécuté avec des droits accrus qui, en plus des droits en fonctionnement normal (NB), permettent l'accès à la partie de système d'exploitation donnée (GB) de l'ordinateur (SE), le processus de serveur web (PR), dans la phase de démarrage (IP), ignorant des requêtes (RE, RE') de clients (CL) et le processus de serveur web (PR) lançant un autre processus (PR') avec les droits accrus du processus de serveur web (PR), l'autre processus (PR') étant prévu pour exécuter des actions avec accès à la partie de système d'exploitation donnée (GB) ;
- à la suite de la phase de démarrage (IP), le processus de serveur web (PR) passe en fonctionnement normal pour traiter des requêtes de clients (CL), au cas où le processus de serveur web (PR) reçoit une requête (RE') qui nécessite une action (A) avec accès à la partie de système d'exploitation donnée (GB), le processus de serveur web (PR) vérifiant l'admissibilité de la requête reçue (RE'), en cas de requête admissible ayant lieu, entre le processus de serveur web (PR) et l'autre processus (PR'), une communication (IPC) qui fait exécuter à l'autre processus (PR') l'action (A) avec l'accès requis à la partie de système d'exploitation donnée (GB) conformément à la requête reçue (RE').

11. Ordinateur selon la revendication 10, **caractérisé en ce que** le serveur web (WS) de l'ordinateur (SE) est configuré pour exécuter un procédé selon l'une des revendications 2 à 9.

12. Produit de programme informatique avec un code de programme sauvegardé sur un support lisible par machine pour exécuter un procédé selon l'une des revendications 1 à 9 lorsque le code de programme est exécuté sur un ordinateur.

13. Programme informatique avec un code de programme pour exécuter un procédé selon l'une des revendications 1 à 9 lorsque le code de programme est exécuté sur un ordinateur.
